# EUROPEAN PATENT APPLICATION

(11) **EP 2 982 559 A1**
(43) Date of publication of application: **10.02.2016**
(21) Application number: 13881145.0
(22) Date of filing: 18.11.2013
(51) Int. Cl.: B60W 10/08, B60K 6/36, B60K 6/38, B60K 6/40, B60K 6/442, B60K 6/547, B60W 10/06, B60W 10/10, B60W 20/00

(54) **VEHICLE CONTROL DEVICE**

(30) Priority: 02.04.2013 JP 2013077159
(71) Applicant: Toyota Jidosha Kabushiki Kaisha, Toyota-shi, Aichi 471-8571 (JP)
(72) Inventor: TAKAHASHI, Tomoya, Toyota-shi Aichi 471-8571 (JP); TANAKA, Takaaki, Toyota-shi Aichi 471-8571 (JP)
(74) Representative: D Young & Co LLP
(86) International application number: PCT/JP2013/081029
(87) International publication number: WO 2014/162631

(57) **Abstract**

Provided is a control apparatus applied to a hybrid vehicle (1) provided with a dual clutch transmission (10)in which a first input shaft (13) is connected via a first clutch (15) to an internal combustion engine (2) and a second input shaft (14) is connected via a second clutch (16) to the internal combustion engine (2); a first MG (3) connected to the first input shaft (13); and a second MG (4) connected to the second input shaft (14). The first clutch (15) is a normally open clutch, and the second clutch (16) is a normally closed clutch. When detecting that hydraulic pressure is impossible to be supplied from a hydraulic supply system (50) to both clutches (15, 16), retreat travel is performed whereby a drive wheel (8) is driven with the power of the first MG (3) while the second MG (4) is driven by the internal combustion engine (2) for generating electricity.

## Description

### Technical Field

The present invention relates to a control apparatus which is applied to a vehicle having a dual clutch transmission where a motor generator is connected to each input shaft.

### Background Art

There is known a dual clutch transmission where some gear trains are provided between a first input shaft and an output system and also provided between a second input shaft and an output system, the dual clutch transmission connecting selectively any one of the two input shafts to an internal combustion engine by means of a clutch provided to each of the input shafts. Also, there is known a hybrid vehicle where such a dual clutch transmission is mounted and a motor is connected to each input shaft (see the Patent Literature 1). According to a vehicle of the Patent Literature 1, when a vehicle is made to start up, executed is a series mode where while one motor is driven by the internal combustion engine to generate electric power, drive wheels are driven by the other motor to travel. In addition, there are the Patent Literatures 2 and 3 as prior art relating to the present invention.

### Citation List

### Patent Literature

PTL1: JP-A- 2003-079005
PTL2: JP-A- 2009-137451
PTL3: JP-A- H11-332009

### Summary of Invention

### Technical Problem

In a case that a vehicle is provided with the dual clutch transmission like the vehicle of the Patent Literature 1 and also each clutch is operated hydraulically, if there occurs an inconvenience such that hydraulic pressure cannot be supplied to both of the clutches, it becomes impossible to change the states of both clutches to an engagement state. In this case, by driving the drive wheels with any one of the motors, it is possible to make the vehicle perform retreat travel. However, if the vehicle travels for a long time in this state, the remaining amount of the battery will reduce.

Then, the present invention aims to provide a control apparatus for a vehicle capable of performing retreat travel while suppressing the reduction of the remaining amount of the battery.

### Solution to Problem

A control apparatus of one aspect of the present invention is a control apparatus applied to a vehicle, the vehicle comprising: an internal combustion engine, a dual clutch transmission: having an input system including a fist input shaft connected to the internal combustion engine via a first clutch and a second input shaft connected to the internal combustion engine via a second clutch, an output system connected power-transmittably to a drive wheel, and a plurality of gear trains, one part of the plurality of gear trains intervening between the first input shaft and the output system and remaining ones of the plurality of gear trains intervening between the second input shaft and the output system, gear ratios of the plurality of gear trains being different from each other; and capable of changing a gear stage between a plurality of gear stages by changing a gear train to be used for power transmission between the input system and the output system, a first motor generator connected power-transmittably to the first input shaft, a second motor generator connected power-transmittably to the second input shaft, and a battery connected electrically to the first motor generator and the second motor generator, wherein the first clutch is a normally open clutch which operates hydraulically and when the hydraulic pressure is not supplied, changes over to a release state where a drive power is shut off between the internal combustion engine and the first input shaft, the second clutch is a normally closed clutch operating hydraulically and, when the hydraulic pressure is not supplied, changing over to an engagement state where a drive power is transmitted between the internal combustion engine and the second input shaft, the vehicle is provided with a hydraulic supply device supplying hydraulic pressure to each of the first clutch and the second clutch, and the control apparatus includes a control device which is configured to perform, when detecting that the hydraulic pressure is impossible to be supplied from the hydraulic supply device to both of the first clutch and the second clutch, retreat travel where, while the second motor generator is driven by the internal combustion engine to generate electricity, the drive wheel is driven by a drive power of the first motor generator.

In the control apparatus of the present invention, the first clutch is the normally open clutch, and the second clutch is the normally closed clutch. Thereby, when hydraulic pressure is impossible to be supplied from the hydraulic supply device to each clutch, the first motor generator is cut off from the internal combustion engine, and the second generator is connected to the internal combustion engine. Then, during the retreat travel, the second motor generator is driven by the internal combustion engine, and the drive wheel is driven by the first motor generator. Therefore, it is possible to perform the retreat travel while it is suppressed to reduce the remaining amount of the battery.

In one embodiment of the present invention, the control device may be configured to control, when detecting that the hydraulic pressure is impossible to be supplied from the hydraulic supply device to both of the first clutch and the second clutch, the transmission so as to establish power transmission between the first input shaft and the output system by any one of the gear trains intervening between the first input shaft and the output system, so as to shut off power transmission between the first input shaft and the output system by remaining ones of the gear trains intervening between the first input shaft and to the output system, and so as to shut off power transmission between the second input shaft and the output system by all gear trains intervening between the second input shaft and the output system. By controlling the transmission in this way, it is possible to drive the drive wheel appropriately with the power of the first motor generator. Further, since the second input shaft is cut off from the output system, it is possible to use the power of the internal combustion engine only for electric generation.

In one embodiment of the present invention, the transmission may be provided with a gear change mechanism which is controlled by the control device to establish selectively the power transmission between the first input shaft and the output system by any one of the gear trains intervening between the first input shaft and the output system, and the gear change mechanism may be controlled to be in a state where the power transmission between the first input shaft and the output system by a specific gear train which is one of the gear trains intervening between the first input shaft and the output system is established, and the power transmission between the first input shaft and the output system by remaining ones of the gear trains intervening between the first input shaft and the output system is shut off, when the gear change mechanism is not controlled by the control device. According to this embodiment, even if the control device loses control of the transmission, the transmission changes over to a gear stage corresponding to the specific gear train. Therefore, it is possible to perform the retreat travel by driving the drive wheel by the first motor generator.

A state that the hydraulic pressure is impossible to be supplied to each clutch includes, for example, a case that hydraulic pressure is impossible to be generated. Then, the hydraulic supply device may comprise an oil pump for generating the hydraulic pressure, and the control device may be configured to detect that the hydraulic pressure is impossible to be supplied from the hydraulic supply device to both of the first clutch and the second clutch, when the oil pump is inoperative.

### Brief Description of Drawings

Fig.1 is a diagram showing schematically a vehicle which a control apparatus according to one embodiment of the present invention is built in.
Fig.2 is a flow chart showing a retreat travel control routine to be executed by a vehicle control apparatus.
Fig.3 is a diagram showing a power transmitting state of the vehicle performing the retreat travel.

### Description of Embodiments

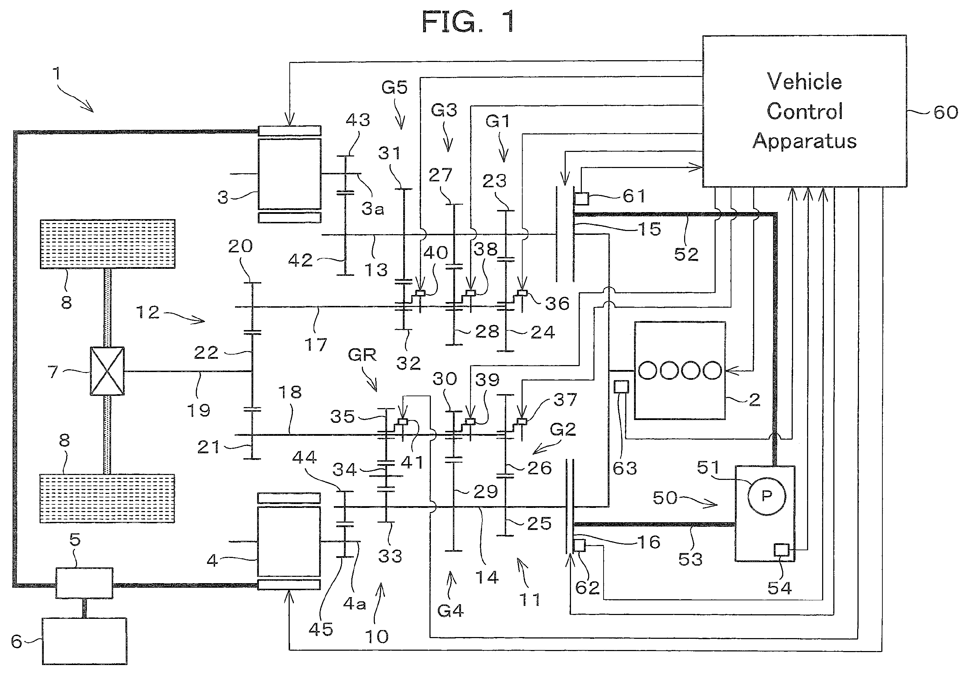

Fig.1 shows schematically a vehicle which a control apparatus according to one embodiment of the present invention is built in. The vehicle 1 comprises as power sources for traveling: an internal combustion engine (hereinafter, referred to as "the engine") 2, a first motor generator (hereinafter, referred to as "the first MG") 3, and a second motor generator (hereinafter, referred to as "the second MG") 4. That is, the vehicle 1 is designed as a hybrid vehicle. The engine 2 is a well-known sparkignited internal combustion engine having a plurality of cylinders. Each of the first MG 3 and the second MG 4 is well-known one which is mounted to a hybrid vehicle to function as an electric motor and an electric power generator. Due to this, with respect to these matters, detailed explanations will be omitted. The first MG 3 and the second MG 4 are electrically connected to a battery 6 via an inverter 5.

In the vehicle 1, mounted is a transmission 10 capable of changing its gear stage to each of a plurality of gear stages (a 1st gear to a 5th gear, and a reverse gear). The transmission 10 is designed as a dual clutch transmission. The transmission 10 comprises an input system 11 and an output system 12. The input system 11 comprises a first input shaft 13 and a second input shaft 14. The first input shaft 13 is connected to the engine 2 via a first clutch 15. The second input shaft 14 is connected to the engine 2 via a second clutch 16. Each of the first clutch 15 and the second clutch 16 is a well-known friction clutch capable of changing its state between: an engagement state that power is transmitted between the engine 2 and the input shaft 13 or 14; and a release state that the power is not transmitted. These clutches 15 and 16 are operated hydraulically. The first clutch 15 is designed as a normally open clutch which changes over to the release state when the hydraulic pressure is not supplied and changes over to the engagement state when the hydraulic pressure is supplied. On the other hand, the second clutch 16 is designed as a normally closed clutch which changes over to the engagement state when the hydraulic pressure is not supplied and changes over to the release state when the hydraulic pressure is supplied.

The output system 12 comprises a first output shaft 17, a second output shaft 18, and a drive shaft 19. As shown in this figure, the first output shaft 17 is provided with a first output gear 20. The second output shaft 18 is provided with a second output gear 21. The drive shaft 19 is provided with a driven gear 22. Each of the first output gear 20 and the second output gear 21 engages with the driven gear 22. The drive shaft 19 is connected power-transmittably to a differential mechanism 7. The differential mechanism 7 is a well-known mechanism for distributing inputted power to right and left drive wheels 8.

Between the input system 11 and the output system 12, a first gear train G1 to a fifth gear train G5 and a reverse gear train GR intervene. As shown in this figure, the first gear train G1, the third gear train G3 and the fifth gear train G5 intervene between the first input shaft 13 and the first output shaft 17. The second gear train G2, the fourth gear train G4, and the reverse gear train GR intervene between the second input shaft 14 and the second output shaft 18.

The first gear train G1 is constituted by a first drive gear 23 and a first driven gear 24 which engage with each other. The second gear train G2 is constituted by a second drive gear 25 and a second driven gear 26 which engage with each other. The third gear train G3 is constituted by a third drive gear 27 and a third driven gear 28 which engage with each other. The fourth gear train G4 is constituted by a fourth drive gear 29 and a fourth driven gear 30 which engage with each other. The fifth gear train G5 is constituted by a fifth drive gear 31 and a fifth driven gear 32 which engage with each other. Each of the first to fifth gear trains G1 to G5 is provided so that a corresponding drive gear and a corresponding driven gear always engage with each other. The gear ratios different from each other are set to the first gear train G1, the second gear train G2, the third gear train G3, the fourth gear train G4, and the fifth gear train G5 respectively, so as to get smaller in this order. Therefore, the first gear train G1 corresponds to a first gear, the second gear train G2 corresponds to a second gear, the third gear train G3 corresponds to a third gear, the fourth gear train G4 corresponds to a fourth gear, and the fifth gear train G5 corresponds to a fifth gear. The reverse gear train GR is constituted by a reverse drive gear 33, an intermediate gear 34, and a reverse driven gear 35.

The first drive gear 23, the third drive gear 27, and the fifth drive gear 31 are fixed to the first input shaft 13 so as to rotate integrally with the first input shaft 13. On the other hand, the first driven gear 24, the third driven gear 28, and the fifth driven gear 32 are supported by the first output shaft 17 so as to rotate relatively with respect to the first output shaft 17. The second drive gear 25, the fourth drive gear 29, and the reverse drive gear 33 are fixed to the second input shaft 14 so as to rotate integrally with the second input shaft 14. On the other hand, the second driven gear 26, the fourth driven gear 30, and the reverse driven gear 35 are supported by the second output shaft 18 so as to rotate relatively with respect to the second output shaft 18. The intermediate gear 34 is supported rotatably by a case not illustrated. As shown in this figure, the intermediate gear 34 engages with each of the reverse drive gear 33 and the reverse driven gear 35.

The first output shaft 17 is provided with a first sleeve 36, a third sleeve 38, and a fifth sleeve 40. These sleeves 36, 38 and 40 are supported on the first output shaft 17 in such a way as to rotate integrally with the first output shaft 17 and move in an axial direction. The first sleeve 36 is provided in such a way as to change its position between an engagement position where the first driven gear 24 engages with the first sleeve 36 so as to rotate integrally with the first output shaft 17 and a release position where the engagement is released. The third sleeve 38 is provided in such a way as to change its position between an engagement position where the third driven gear 28 engages with the third sleeve 38 so as to rotate integrally with the first output shaft 17 and a release position where the engagement is released. The fifth sleeve 40 is provided in such a way as to change its position between an engagement position where the fifth driven gear 32 engages with the fifth sleeve 40 so as to rotate integrally with the first output shaft 17 and a release position where the engagement is released. Hereinafter, a case that all positions of the first sleeve 36, the third sleeve 38, and the fifth sleeve 40 have been changed to the release positions is sometimes referred to as a neutral state. The first sleeve 36, the third sleeve 38, and the fifth sleeve 40 are collectively referred to as a first gear change mechanism. The first gear change mechanism corresponds to a gear change mechanism of the present invention.

The second output shaft 18 is provided with a second sleeve 37, a fourth sleeve 39, and a reverse sleeve 41. These sleeves 37, 39 and 41 are supported on the second output shaft 18 in such a way as to rotate integrally with the second output shaft 18 and move in an axial direction. The second sleeve 37 is provided in such a way as to change its position between an engagement position where the second driven gear 26 engages with the second sleeve 37 so as to rotate integrally with the second output shaft 18 and a release position where the engagement is released. The fourth sleeve 39 is provided in such a way as to change its position between an engagement position where the fourth driven gear 30 engages with the fourth sleeve 39 so as to rotate integrally with the second output shaft 18 and a release position where the engagement is released. The reverse sleeve 41 is provided in such a way as to change its position between an engagement position where the reverse driven gear 35 engages with the reverse sleeve 41 so as to rotate integrally with the second output shaft 18 and a release position where the engagement is released. Hereinafter, a case that all positions of the second sleeve 37, the fourth sleeve 39, and the reverse sleeve 41 have been changed to the release positions is sometimes referred to as a neutral state. The second sleeve 37, the fourth sleeve 39, and the reverse sleeve 41 are collectively referred to as a second gear change mechanism.

Not illustrated, but the transmission 10 is provided with a plurality of actuators for driving sleeves 36 to 41 respectively. Since these actuators are a well-known motor drive mechanism to be provided to a transmission, the explanation of the actuators will be omitted. Also not illustrated, but to each of the output shafts 17 and 18, provided for each driven gear is a synchronizing mechanism which synchronizes the rotation of the sleeve 36, 37, 38, 39, 40 or 41 with the rotation of the driven gear 24, 26, 28, 30, 32 or 35 at the moment when the sleeve and the driven gear are made to engage with each other. As such a synchronizing mechanism, a synchronizing mechanism for synchronizing the rotations by frictional engagement, for example, a well-known key-type synchromesh mechanism may be used. Therefore, a detailed description of the synchronizing mechanism will be omitted.

The first input shaft 13 is provided with a first driven gear 42. The output shaft 3a of the first MG 3 is provided with a first drive gear 43 engaging with the first driven gear 42. Due to this, the first MG 3 is connected power-transmittably to the first input shaft 13. The gear ratio between the first drive gear 43 and the first driven gear 42 is set so that the rotation of the first MG 3 is transmitted to the first input shaft 13 in a state where the rotational speed has been reduced. The second input shaft 14 is provided with the second driven gear 44. The output shaft 4a of the second MG 4 is provided with a second drive gear 45 engaging with the second driven gear 44. Due to this, the second MG 4 is connected power-transmittably to the second input shaft 14. The gear ratio between the second drive gear 45 and the second driven gear 44 is set so that the second MG 4 and the second input shaft 14 rotate at the almost same rotational speed. In this way, the gear ratio between the first drive gear 43 and the first driven gear 42 and the gear ratio between the second drive gear 45 and the second driven gear 44 are set to differ from each other.

The transmission 10 is provided with a hydraulic supply system 50 as a hydraulic supply device. The hydraulic supply system 50 comprises an oil pump 51 for generating hydraulic pressure. Since the oil pump 51 is a well-known oil pump which is driven by the engine 2 or the electric motor, a detailed explanation thereof will be omitted. The hydraulic pressure which is generated by the oil pump 51 is supplied to the first clutch 15 via a first supply passage 52, and to the second clutch 16 via a second supply passage 53. The hydraulic supply system 50 is provided with a trouble sensor 54 which outputs a signal when the oil pump 51 is inoperative. It may be determined based on, for example, the discharge pressure of the oil pump 51 or the rotational speed of the oil pump 51 whether the oil pump 51 is inoperative or not. Concretely, it may be determined that the oil pump 51 is inoperative, when the discharge pressure is low or the rotational speed is almost zero though the oil pump 51 is driven by the engine 2 or the electric motor. In such cases, the trouble sensor 54 outputs a signal.

The operations of the engine 2, the first MG 3, the second MG 4, the first clutch 15, the second clutch 16, and sleeves 36 to 41 are controlled by a vehicle control apparatus 60. The vehicle control apparatus 60 is configured as a computer unit including a micro processor and peripheral devices necessary of operations of the micro processor, such as a RAM and a ROM. The vehicle control apparatus 60 holds various kinds of control programs to make the vehicle 1 travel appropriately. The vehicle control apparatus 60 controls, by executing those programs, control objects such as the engine 2, the MGs 3 and 4. The vehicle control apparatus 60 is connected to various kinds of sensors for obtaining information relating to the vehicle 1. For example, the vehicle control apparatus 60 is connected to the first clutch sensor 61, the second clutch sensor 62, and the crank angle sensor 63. The first clutch sensor 61 outputs a signal when the first clutch 15 is in the engagement state while does not output a signal when the first clutch 15 is in the release state. The second clutch sensor 62 outputs a signal when the second clutch 16 is in the engagement state while does not output a signal when the second clutch 15 is in the release state. The crank angle sensor 63 outputs a signal corresponding to the rotational speed (the number of rotations) of the engine 2. Further, the vehicle control apparatus 60 is connected to the trouble sensor 54 above-mentioned. In addition to these sensors, various kinds of sensors, switches and the like are connected to the vehicle control apparatus 60. However, the illustrations of theses ones will be omitted.

The vehicle control apparatus 60, when hydraulic pressure is impossible to be supplied to both of the first and second clutches 15 and 16, performs the retreat travel where the drive wheels 8 are driven by the first MG 3 while the second MG 4 is driven by the engine 2 to generate electricity.

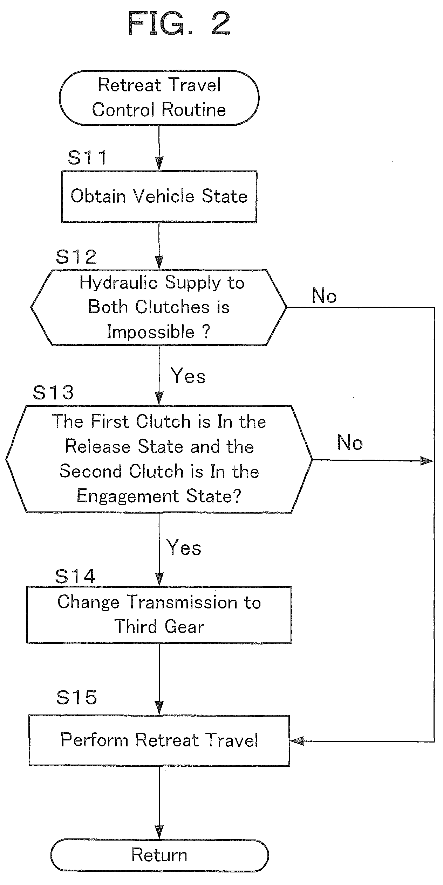

Fig.2 shows a retreat travel control routine executed by the vehicle control apparatus 60 in order to perform the retreat travel. This control routine is executed repeatedly at predetermined interval regardless whether the vehicle 1 is in the middle of traveling or not. By executing this control routine, the vehicle control apparatus 60 functions as the control device of the present invention.

In this control routine, the vehicle control apparatus 60 obtains a state of the vehicle 1 in step S11. As the state of the vehicle 1, the state of the first clutch 15, the state of the second clutch 16, the rotational speed of the engine 2 and the like are obtained. In addition to these state, in this processing, various kinds of information relating to the state of vehicle 1 is obtained.

In the next step S12, the vehicle control apparatus 60 determines whether hydraulic pressure is impossible to be supplied to both of the first and the second clutches 15 and 16. This determination may be made, for example, based on the output signal of the trouble sensor 54. When determining that the hydraulic pressure is possible to be supplied to at least one of the first clutch 15 and the second clutch 16, the vehicle control apparatus 60 ends the control routine of this time.

On the other hand, when determining that hydraulic pressure is impossible to be supplied to both of the first and second clutches, the vehicle control apparatus 60 goes to step S13 to determine whether the first clutch 15 is in the release state and also the second clutch 16 is in the engagement state. This determination may be made, for example, based on the output signal from each of the clutch sensors 61 and 62. When determining that the first clutch 15 is in the engagement state or the second clutch 16 is in the release state, the vehicle control apparatus 60 ends the control routine of this time.

On the other hand, when determining that the first clutch 15 is in the release state and also the second clutch 16 is in the engagement state, the vehicle control apparatus 60 goes to step S14 to change the state of transmission 10 to the third gear. That is, with respect to the first gear change mechanism, the position of the third sleeve 38 is changed to the engagement position, and the positions of the first sleeve 36 and the fifth sleeve 40 are changed to the release positions respectively. And, with respect to the second gear change mechanism, the positions are changed to the neutral state.

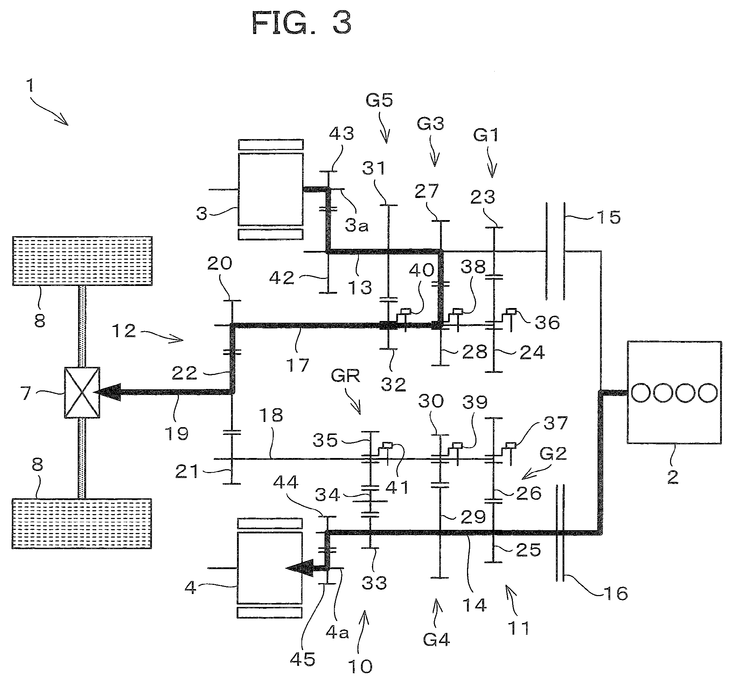

In the next step S15, the vehicle control apparatus 60 performs the retreat travel. During the retreat travel, the vehicle control apparatus 60 makes the first MG 3 function as an electric motor and makes the second MG 4 function as an electric power generator. While the second MG 4 is driven with the engine 2 to generate electric power, the drive wheels 8 are driven with the first MG 3 to make the vehicle 1 travel. Fig.3 shows a power transmitting state of the vehicle 1 performing such retreat travel. In this figure, a solid line indicates the power transmitting state. In this figure, the illustrations of the inverter 5, the battery 6, the hydraulic pressure supply system 50, and the control system are omitted. After that, the vehicle control apparatus 60 ends the control routine of this time.

As mentioned above, in the above embodiment, the first clutch 15 is a normally open clutch, and the second clutch 16 is a normally closed clutch. And, when hydraulic pressure is impossible to be supplied to both of the clutches 15 and 16, electricity is generated by the second MG 4 and the vehicle 1 is made to travel by the first MG 3. In this case, the first MG 3 may be operated by using the electricity generated by the second MG 4, and the battery 6 may be charged with surplus electricity. On the other hand, when the electricity generated by the second MG 4 is inadequate, the electricity of the battery 6 may be used. By performing the retreat travel in this way, it is possible to perform the retreat travel while suppressing the reduction of the remaining amount of the battery 6.

In the embodiment mentioned above, used is the motor drive mechanism as the actuator which drives each of the sleeves 36 to 41 of the transmission 10. However, a hydraulic pressure drive mechanism may be used as the actuators for them. In this case, when the hydraulic pressure is impossible to be supplied from the oil pump 51, it is impossible to operate the actuators. Then, a normally closed actuator which changes the position of the third sleeve 38 to the engagement position when the hydraulic pressure is not supplied may be applied to as the actuator which drives the third sleeve 38, and normally open actuators which change the positions of the sleeves to the release positions when the hydraulic pressure is not supplied may be applied to the remaining actuators which drive the sleeves 36, 37, and 39 to 41. In this case, even though the actuators are inoperative because the hydraulic pressure is not supplied to the actuators, it is possible to change the state of the transmission 10 to the third gear. Also, similarly, even when the motor drive mechanism is used as the actuators, one of the actuators may be set to the normally closed actuator and the others may be set to the normally open actuators. By providing the actuators in this way, the third gear train corresponds to the specific gear train of the present invention.

In the embodiment mentioned above, when the oil pump 51 is inoperative, it is determined that the hydraulic pressure is impossible to be supplied to both of the clutches 15 and 16. However, a method for detecting that the hydraulic pressure is impossible to be supplied to each of the clutches 15 and 16 is not limited to this method. For example, the following method may be applied. A hydraulic sensor is provided to each of the first clutch 15 and the second clutch 16. And, when the value of the hydraulic pressure is lower than the level needed to operate the clutches 15 and 16, it is determined that the hydraulic pressure is impossible to be supplied to both of the clutches 15 and 16.

The present invention is not limited to the above mentioned embodiments, and can be executed in various kinds of embodiments. For example, the gear stage to which the state of the transmission is changed at the moment of the retreat travel is not limited to the third gear, and may be to the first gear or the fifth gear. In the present invention, the first clutch may be set to the normally closed clutch, and the second clutch may be set to the normally open clutch. And, the retreat travel may be performed in such a way that the state of the transmission is changed to the second gear or the fourth gear, and while the first MG is driven by the engine in order to generate electricity, the drive wheels are driven by the second MG. In this case, the first clutch, the first input shaft, and the first motor generator in Fig.1 correspond to the second clutch, the second input shaft, and the second motor generator of the present invention respectively. And, the second clutch, the second input shaft, and the second motor generator in Fig.1 correspond to the first clutch, the first input shaft, and the first motor generator of the present invention respectively.

In the embodiment mentioned above, the input shaft and the motor generator are power-transmittably connected to each other via gears. However, the output shaft of the motor generator may be directly connected to the input shaft. The hybrid vehicle which the present invention is applied to is not limited to a hybrid vehicle where mounted is a dual clutch transmission having five forward gear stages. The present invention may be applied to various kinds of hybrid vehicles where mounted is a dual clutch transmission having three forward gear stages and more.

## Claims

1. A control apparatus applied to a vehicle, the vehicle comprising:
an internal combustion engine,
a dual clutch transmission: having an input system including a fist input shaft connected to the internal combustion engine via a first clutch and a second input shaft connected to the internal combustion engine via a second clutch, an output system connected power-transmittably to a drive wheel, and a plurality of gear trains, one part of the plurality of gear trains intervening between the first input shaft and the output system and remaining ones of the plurality of gear trains intervening between the second input shaft and the output system, gear ratios of the plurality of gear trains being different from each other; and capable of changing a gear stage between a plurality of gear stages by changing a gear train to be used for power transmission between the input system and the output system,
a first motor generator connected power-transmittably to the first input shaft,
a second motor generator connected power-transmittably to the second input shaft, and
a battery connected electrically to the first motor generator and the second motor generator, wherein
the first clutch is a normally open clutch which operates hydraulically and when the hydraulic pressure is not supplied, changes over to a release state where power is shut off between the internal combustion engine and the first input shaft,
the second clutch is a normally closed clutch operating hydraulically and, when the hydraulic pressure is not supplied, changing over to an engagement state where power is transmitted between the internal combustion engine and the second input shaft,
the vehicle is provided with a hydraulic supply device supplying hydraulic pressure to each of the first clutch and the second clutch, and
the control apparatus includes a control device which is configured to perform, when detecting that the hydraulic pressure is impossible to be supplied from the hydraulic supply device to both of the first clutch and the second clutch, retreat travel where, while the second motor generator is driven by the internal combustion engine to generate electricity, the drive wheel is driven by power of the first motor generator.

2. The control apparatus according to claim 1, wherein
the control device is configured to control, when detecting that the hydraulic pressure is impossible to be supplied from the hydraulic supply device to both of the first clutch and the second clutch, the transmission so as to establish power transmission between the first input shaft and the output system by any one of the gear trains intervening between the first input shaft and the output system, so as to shut off power transmission between the first input shaft and the output system by remaining ones of the gear trains intervening between the first input shaft and to the output system, and so as to shut off power transmission between the second input shaft and the output system by all gear trains intervening between the second input shaft and the output system.

3. The control apparatus according to claim 1, wherein
the transmission is provided with a gear change mechanism which is controlled by the control device to establish selectively the power transmission between the first input shaft and the output system by any one of the gear trains intervening between the first input shaft and the output system, and
the gear change mechanism is controlled to be in a state where the power transmission between the first input shaft and the output system by a specific gear train which is one of the gear trains intervening between the first input shaft and the output system is established, and the power transmission between the first input shaft and the output system by remaining ones of the gear trains intervening between the first input shaft and the output system is shut off, when the gear change mechanism is not controlled by the control device.

4. The control apparatus according to any one of claims 1 to 3, wherein
the hydraulic supply device comprises an oil pump for generating the hydraulic pressure, and
the control device is configured to detect that the hydraulic pressure is impossible to be supplied from the hydraulic supply device to both of the first clutch and the second clutch, when the oil pump is inoperative.
